# EUROPÄISCHE PATENTSCHRIFT

(11) **EP 1 118 245 B1**
(45) Veröffentlichungstag und Bekanntmachung des Hinweises auf die Patenterteilung: **20.06.2007**
(21) Anmeldenummer: 99959181.1
(22) Anmeldetag: 30.09.1999
(51) Int. Cl.: H04Q 11/04

(54) **LEITUNGSABSCHLUSSVORRICHTUNG FÜR EINE TEILNEHMERANSCHLUSSLEITUNG**
LINE TERMINATOR UNIT FOR A SUBSCRIBER LINE
DISPOSITIF DE TERMINAISON DE LIGNE POUR UNE LIGNE DE RACCORDEMENT D'ABONNE

(30) Priorität: 30.09.1998 DE 19844941; 21.08.1999 DE 29914706 U
(43) Veröffentlichungstag der Anmeldung: 25.07.2001
(73) Patentinhaber: Infineon Technologies AG, 81669 München (DE); Siemens Home and Office Communication Devices GmbH & Co. KG, 81541 München (DE)
(72) Erfinder: HAUPTMANN, Jörg, A-9241 Wernberg (AT); PREITNEGGER, Manfred, A-9020 Klagenfurt (AT); RUDOLF, Hans-Werner, D-81667 München (DE); KUNISCH, Paul, D-82178 Puchheim (DE); KROTTENDORFER, Gerald, A-1220 Wien (AT); FRENZEL, Rudi, D-81735 München (DE); TERSCHLUSE, Markus, D-81673 München (DE); SCHMÜCKING, Dirk, A-9500 Villach (AT)
(74) Vertreter: Reinhard - Skuhra - Weise & Partner
(86) Internationale Anmeldenummer: PCT/DE1999/003214
(87) Internationale Veröffentlichungsnummer: WO 2000/019767

(56) Entgegenhaltungen:
- EP-A- 0 643 477
- EP-A- 0 795 977
- EP-A- 0 840 474
- EP-A- 0 889 614
- EP-A- 0 923 221
- WO-A-97/20396
- WO-A-98/32241
- SUGIMOTO S ET AL: "DESIGN OF 2B1Q TRANSCEIVER FOR ISDN SUBSCRIBER LOOPS" INTERNATIONAL CONFERENCE ON COMMUNICATIONS (ICC '89), IEEE, Bd. -, 11. Juni 1989 (1989-06-11), Seiten 228-232, XP000075463 NEW YORK, US

## Beschreibung

Die Erfindung betrifft eine Leitungsabschlußvorrichtung nach dem Oberbegriff des Patentanspruchs 1, daß heißt eine Leitungabschlußvorrichtung für eine Teilnehmeranschlußleitung, die breitbandige Signale über eine einzige Teilnehmeranschlußleitung sendet und empfängt, wobei sich ein breitbandiges Signal aus einem breitbandigen oder schmalbandigen niederfrequenten Sprachsignal und einem breitbandigen höherfrequenten Datensignal Datensignal zusammensetzt und sich die Frequenzbänder des Sprachsignals und des Datensignals im wesentlichen nicht überschneiden.

Eine Leitungsabschlußvorrichtung gemäß dem Oberbegriff des Anspruchs 1 ist aus der WO-A-97/20396 bekannt.

Die EP 0795 977 A2 offenbart die Verwendung eines digitalen ISDN-Filters im Dezimator des Empfängerteils eines ADSL-Tranceivers.

über einen analogen Teilnehmeranschluß im Telefonnetz erfolgt die Sprachübertragung analog. Während bei einem herkömmlichen Sprachübertragurgssystem wie dem sogenannten POTS (Plain Old Telephone System; nur ein relativ schmales Frequenzband, das sogenannte Sprachband zur Sprachübertragung verwendet werden konnte, erfolgt bei neueren ISDN-Systemen die Sprachübertragung über ein relativ breites Frequenzband.

Bei den derzeitigen xDSL-Übertragungsverfahren (xDSL = x-Digital Subscriber Line) werden im Telefonnetz auch die Frequenzbereiche oberhalb des Sprachbandes breitbandig zur Datenübertragung genutzt. Unter xDSL-Übertragungsverfahren sind HDSL- (High Bit Rate Digital Subscriber Line), ADSL- (Symmetric Digital Subscriber Line) und VDSL-Obertragungsverfahren (Very High Speed Digital Subscriber Line) zu verstehen. Die xDSL-Übertragungsverfahren werden als Breitband-Netzwerkzugang bezeichnet und umfassen alle Übertragungsverfahren über das Telefonnetz, die eine höhere Datenübertragungsrate zwischen einem Teilnehmer und der Vermittlungsstelle als die mit Sprachbandmodems erreichbare Datenübertragungsrate ermöglichen. Dazu wird bei den xDSL-Übertragungverfahren ein sogenanntes xDSL-Datensignal, daß ein für das xDSL-Übertragungsverfahren kodiertes digitales Signal bezeichnet, in einem vom Sprachband getrennten höheren Frequenzband übertragen. Die xDSL-Übertragungsverfahren können theoretisch die gesamte, oberhalb des Sprachbandes zur Verfügung stehende Bandbreite der Kupferdoppelader nutzen und erreichen Datenübertragungsraten im Mbps-Bereich.

Trotz der getrennten Übertragung von Sprache und Daten in unterschiedlichen Frequenzbereichen bei den xDSL-Übertragungsverfahren können Nebenfrequenzen aus dem Sprachband in das Datenband gelangen und umgekehrt. Insbesondere Steuersignale im Sprachband, wie beispielsweise Rufsignale oder Gebührenimpulse, können Störungen im Datenband hervorrufen und die Datenübertragung unterbrechen oder ganz abbrechen.

Um solche Störungen zu vermeiden müssen das Sprachband und das Datenband vor der weiteren Verarbeitung getrennt werden. Dazu werden Frequenzweichen, sogenannte POTS-Splitter, benötigt, die empfangsseitig ein breitbandiges Signal in ein schmalbandiges niederfrequentes Sprachsignal und ein breitbandiges höherfrequentes Datensignal trennen und sendeseitig Sprachsignale und Datensignale filtern und zu einem breitbandigen Signal zusammenführen.

In der obengenannten WO-A-97/20396 (bzw. der US 5,757,803) ist ein POTS-Splitter beschrieben, der ein Tiefpaßfilter und zwei Kapazitäten aufweist, wobei das Tiefpaßfilter einen Durchlaßbereich für das Sprachband aufweist und einem analogen Teilnehmerendgerät vorgeschaltet ist und wobei die beiden Kapazitäten Steuersignale aus dem Sprachband unterdrücken und einem xDSL-Sender/Empfänger vorgeschaltet sind. In dem xDSL-Sender/Empfänger, der über die beiden Kapazitäten mit einer Teilnehmeranschlußleitung verbunden ist, befinden sich weitere analoge Hochpaßfilter, die zusammen mit den beiden Kapazitäten das Datenband vom Sprachband trennen.

Aus der US 5,742,527 ist ein ADSL-Sender und -Empfänger bekannt, der ein breitbandiges Signal über eine Teilnehmeranschlußleitung empfängt und sendet und aus dem empfangenen Signal mit einem Bandpaßfilter ein analoges Sprachsignal wegfiltert. Ein zu sendendes ADSL-Signal wird ebenfalls mit einem Bandpaßfilter gefiltert, um Störfrequenzen, die vom ADSL-Signal in das Sprachband gelangen können, aus dem Sprachband zu entfernen, so daß die Sprachbandübertragung nicht beeinflußt wird. Der ADSL-Empfänger weist einen Analog-Digital-Umsetzer und einen dem Analog-Digital-Umsetzer nachgeschalteten Dezimator auf, der aus dem empfangenen Signal ein im Signal vorhandenes ISDN-Signal ausfiltert. Der ADSL-Sender weist einen Interpolator mit Hochpaßfilterfunktion auf, der vor einem Digital-Analog-Umsetzer geschaltet aus einem zu sendenden ADSL-Signal Störfrequenzen, die im Sprachband liegen, ausfiltert.

Bei den oben genannten Lösungen sind jedoch immer analoge Filter notwendig, die aus aktiven und/oder passiven Elementen aufgebaut sind. Da zur Trennung des Sprach- und Datenbandes steile Filterflanken erforderlich sind, werden analoge Filter höhererer Ordnung benötigt, die als analoge Filter sehr aufwendig und teuer sind. Ferner ist eine Lösung mit analogen Filtern nur umständlich an Spezifikationsänderungen anpaßbar, beispielsweise wenn sich die Trennfrequenz von Sprach- und Datenband ändert.

Die vorliegende Erfindung betrifft insbesondere das sendeseitige Zusammenführen und das empfangsseitige Trennen von zwei oder mehreren, in getrennten Frequenzbereichen liegenden Signalströmen unterschiedlicher Übertragungsverfahren, wie zum Beispiel ADSL und ISDN, zur Übertragung auf dem gleichen Übertragungsmedium, beispielsweise einer Teilnehmeranschlußleitung.

Bei derzeitigen Leitungsabschlußleitungen für Teilnehmeranschlußleitungen werden die einzelnen Signalströme in jeweils eigenen Transceivereinheiten behandelt. Das Zusammenführen bzw. Trennen der Signalströme erfolgt wie bereits erwähnt durch sogenannte Splitter-Schaltungen bzw. Frequenzweichen, die die Teilnehmeranschlußleitungen auf beiden Seiten terminieren und jeweils ein Interface für die Signalströme der einzelnen Übertragungsverfahren bereitstellen. Gattungsgemäße Splitter-Schaltungen nach dem Stand der Technik sind als passive analoge Filter ausgebildet. Für die Transceiver zum Erzeugen und Empfangen der Signalströme sind diese Splitter-Schaltungen im Idealfall transparent. Tatsächlich jedoch beeinträchtigen diese Splittermodule das Übertragungsverhalten der einzelnen Dienste bzw. der Übertragungsverfahren beträchtlich, da die Filterfrequenzgänge nie mit einem idealen Frequenz- und Phasengang realisiert werden können, d.h. die Frequenzbereiche können praktisch nicht vollkommen rückwirkungsfrei voneinander getrennt werden. Zum Beispiel tritt bei einem gemeinsamen Betrieb von ADSL und ISDN tritt dadurch typischerweise eine Verringerung der ISDN-keichweite auf, wohingegen der ADSL-Dienst eine geringere Datenrate bei gleicher Leitungslänge erreicht.

Ausgehend von diesem Stand der Technik liegt der vorliegenden Erfindung daher die technische Aufgabe zugrunde, eine gattungsgemäße Leitungsabschlußvorrichtung für eine Teilnehmeranschlußleitung bereitzustellen, die eine einfache und unter Einbeziehung von Spezifikationsänderungen anpaßbare Lösung zur Trennung von Sprach- und Datenband bietet.

Erfindungsgemäß wird diese Aufgabe durch eine Leitungsabschlußvorrichtung für eine Teilnehmeranschlußleitung mit den Merkmalen des Patentanspruchs 1 gelöst.

Demgemäß ist eine Leitungabschlußvorrichtung für eine Teilnehmeranschlußleitung vorgesehen, die gekennzeichnet ist durch eine digitale Frequenzweiche, die das niederfrequente Sprachsignal und das höherfrequente Datensignal voneinander trennt und die im Digitalteil der Leitungsabschlußvorrichtung angeordnet ist.

Vorteilhafte Ausgestaltungen und Weiterbildungen der Erfindung ergeben sich aus den jeweiligen Unteransprüchen.

Vorteilhafterweise erfolgt die Auftrennung des breitbandigen Empfangssignals in ein erstes digitales Sprachsignal und ein erstes digitales Datensignal mit digitalen Mitteln, die eine bessere und schnellere Anpaßbarkeit an sich ändernde Spezifikationen, die die Trennfrequenz der Frequenzweiche betreffen, als analoge Mittel ermöglichen.

Die Leitungsabschlußvorrichtung kann sowohl bei einem Teilnehmer in beispielsweise einem ADSL-Sender und -Empfänger als auch in einer Vermittlungsstelle (CO = Central Office) auf einer Leitungsanschlußkarte angeordnet sein.

In der Vermittlungstelle ist die Leitungsabschlußvorrichtung einer Teilnehmerleitungsschaltung (SLIC = Subscriber Line Circuit) nachgeschaltet. Die Teilnehmerleitungsschaltung versorgt die Teilnehmeranschlußleitung mit einem Leitungsstrom.

Beim Teilnehmer kann eine Übertragerschaltung die Teilnehmeranschlußleitung an die Leitungsabschlußvorrichtung koppeln.

In einer besonders bevorzugten Ausführungsform weist die digitale Frequenzweiche ein erstes digitales Tiefpaßfilter und ein erstes digitales Hochpaßfilter auf, wobei dem ersten digitalen Tiefpaßfilter und dem ersten digitalen Hochpaßfilter das digitale Empfangssignal zugeführt wird. Ferner weist die digitale Frequenzweiche ein zweites digitales Tiefpaßfilter und ein zweites digitales Hochpaßfilter und einen digitalen Summierer auf, wobei das zweite digitale Sprachsignal dem zweiten digitalen Tiefpaßfilter und das zweite digitale Datensignal dem zweiten digitalen Hochpaßfilter zugeführt wird und der digitale Summierer das Ausgangssignal des zweiten digitalen Tiefpaßfilters und des zweiten digitalen Hochpaßfilters zu dem digitalen Sendesignal addiert.

In einer besonders bevorzugten Ausführungsform weist das erste digitale Tiefpaßfilter eine erste Reihenschaltung von mindestens einem ersten Dezimationsfilter und das erste digitale Hochpaßfilter eine zweite Reihenschaltung von mindestens einem zweiten Dezimationsfilter auf. Vorteilhafterweise ermöglichen Dezimationsfilter die Herabsetzung der Abtastrate von digitalen Signalen und passen die Abtastrate des ersten digitalen Sprachsignals und die Abtastrate des ersten digitalen Datensignals an die Abtastraten einer darauffolgenden digitalen Sprachverarbeitungseinrichtung bzw. einer darauffolgenden digitalen Datenverarbeitungseinrichtung an.

In einer weiteren besonders bevorzugten Ausführungsform weist das zweite digitale Tiefpaßfilter eine dritte Reihenschaltung von mindestens einem ersten Interpolationsfilter und das zweite digitale Hochpaßfilter eine vierte Reihenschaltung von mindestens einem zweiten Interpolationsfilter auf. Vorteilhafterweise erhöhen Interpolationsfilter die Abtastrate von digitalen Signalen und passen somit die Abtastrate des zweiten digitalen Sprachsignals und des zweiten digitalen Datensignals an die Abtastrate des nachgeschalteten Digital-Analog-Umsetzers an.

In einer bevorzugten Ausführungsform weist die digitale Frequenzweiche ein dem digitalen Summierer nachgeschaltetes Noise-Shaper-Filter auf. Das Noise-Shaper-Filter paßt vorteilhafterweise die Wortbreite des digitalen Sendesignals an die Verarbeitungswortbreite des Digital-Analog-Umsetzers an.

In einer besonders bevorzugten Ausführungsform wird als Analog-Digital-Umsetzer ein überabtastender, nach dem Sigma-Delta-Vefahren arbeitender Analog-Digital-Umsetzer benutzt. Von Vorteil ist dabei die hohe Abtastfrequenz, die ein dem Analog-Digital-Umsetzer vorgeschaltetes Antialiasing-Filter niedriger Ordnung und damit einfachen Aufbaus ermöglicht. Dadurch läßt sich das Antialiasing-Filter bei einem Aufbau der Leitungsabschlußvorrichtung in einer integrierten Schaltung mitintegrieren.

Das erste digitale Tiefpaßfilter, das erste digitale Hochpaßfilter, das zweite digitale Tiefpaßfilter und das zweite digitale Hochpaßfilter sind erfindungsgemäß als Programme in einem digitalen Signalprozessor ausgeführt. Vorteilhafterweise läßt sich damit die Filterfunktion durch eine Programmänderung an Spezifikationsänderungen bezüglich der Trennfrequenzen von ersten digitalen Sprachsignal und ersten digitalen Datensignal anpassen.

In einer weiteren besonders bevorzugten Ausführungsform ist dem Analog-Digital-Umsetzer eine automatische Verstärkungskontrollschaltung zur Regelung der Amplitude des empfangenen breitbandigen analogen Signals vorgeschaltet. Vorteilhafterweise werden dadurch Frequenzen des Datenbandes verstärkt und Frequenzen des Sprachbandes abgeschwächt. Die Frequenzen des Datenbandes werden bei der Übertragung über die Teilnehmeranschlußleitung stärker gedämpft als die Frequenzen des Sprachbandes.

Dem Digital-Analog-Umsetzer ist eine Leistungsanpassungschaltung zur Anpassung der spektralen Leistungsverteilung in einer weiteren besonders bevorzugten Ausführungsform nachgeschaltet. Die Leistungsanpassungschaltung verstärkt dabei Frequenzen mit geringer spektraler Leistung und schwächt Frequenzen mit hoher spektraler Leistung ab. Vorteilhafterweise ist nach der Anpassung der spektralen Leistungsverteilung die spektrale Leistung gleichmäßiger über das Sprach- und Datenband verteilt.

Der besondere Vorteil der erfindungsgemäßen Leistungsabschlußvorrichtung liegt in der Verschiebung der Splitterfunktionalität aus dem analogen Bereich in den digitalen Bereich. Dies wird durch einen taktsynchronen Betrieb der einzelnen Übertragungsverfahren, die sich dieselbe Teilnehmeranschlußleitung teilen, ermöglicht. Weiterhin können durch eine geeignete frequenzabhängige Außenbeschaltung des analogen Front-Ends die unterschiedlichen Impedanzanforderungen über den gesamten relevanten Frequenzbereich realisiert werden. Eine weitere Möglichkeit zur Realisierung des geforderten Impedanzverlaufs des Leitungsinterfaces besteht in der Verwendung von Impedanzsyntheseschleifen im analogen Front-End.

Durch die Verschiebung der Splitterfunktionalität vom analogen in den digitalen Bereich der Transceiver sind die Transceiverschältungen der einzelnen Übertragungsverfahren nicht mehr vollständig unabhängig voneinander. Sie verwenden unter anderem ein gemeinsames analoges Front-End. Das gemeinsame Sende-/Empfangssignal wird in einem digitalen Splittermodul durch Anwendung allgemein bekannter digitaler Filteralgorithmen frequenzmäßig zusammengeführt bzw. getrennt. Dabei sollte beachtet werden, daß die Sample-Raten der Einzelströme am Summationspunkt bzw. bei der Auftrennung gleich sein sollte. Dies wird durch Sampleraten-Adaptionsstufen sowie eine Taktsynchronisationseinheit in den digitalen Splittermodulen erreicht.

Die Verwendung eines digitalen Splittermoduls kann in den Systemen auf beiden Seiten der Teilnehmeranschlußleitung erfolgen, d.h. sowohl auf der Teilnehmerseite als auch auf der Netzwerkseite.

Durch die erfindungsgemäße Leitungsabschlußvorrichtung mit Trennung von Daten- und Sprachband im Digitalteil werden folgende Vorteile erzielt:
- Die Erfindung erlaubt es, das analoge Splittermodul durch ein digitales Splittermodul zu ersetzen. Das digitale Splittermodul kann in einem einzigen integrierten Schaltkreis (IC)- gleichzeitig für mehrere Kanäle pro Chip - realisiert werden. Der Aufbau eines passiven analogen Splitters benötigt dagegen einen erheblichen Platzbedarf, da Spulen und Kondensatoren mit zum Teil hohen Anforderungen an Spannungsfestigkeit und Bauteiltoleranz verwendet werden müssen. Die Kosten unterscheiden sich je nach Ausführung um ein Mehrfaches zu ungunsten der analogen Lösung.
- Für alle Übertragungsverfahren, die sich eine Teilnehmeranschlußleitung teilen, wird vorteilhafterweise nur ein einziges gemeinsames analoges Front-End benötigt, während bei den heutigen Lösungen in jedem Transceiver ein analoges Front-End enthalten sein muß. Daraus resultiert eine signifikante Kostenreduktion.
- Die Charakteristika digitaler Filter können wesentlich strengeren Anforderungen hinsichtlich Flankensteilheit und minimaler Gruppenlaufzeitverzerrungen Genüge leisten. Ein System mit digitalem Splitter kann daher derart optimiert werden, daß es geringeren Performance-Einbußen unterliegt als ein vergleichbares System mit analogem Splitter. Ferner erweist sich die Schaltung auch in Hinblick auf die EMV-Abstrahlung verursacht durch allzu steile Taktflanken als vorteilhafter.
- Ein Übersprechen zwischen den einzelnen Übertragungsverfahren durch eine unzureichende Außenbanddämpfung wird durch den Einsatz von Echocanceller-Modulen in digitalen Splittermodulen deutlich vermindert. Dies führt zu einer weiteren Verminderung der Performance-Einbußen, die beim gemeinsamen Betrieb mehrerer Übertragungsverfahren auf der gleichen Teilnehmeranschlußleitung entstehen können.
- Durch die erfindungsgemäße Taktsynchronisation kommen zusätzliche Dienste, wie beispielsweise das sogenannte "Voice over IP", im ADSL-Service ohne weitere Taktsynchronisation aus.

Weitere Vorteile, Merkmale und Anwendungsmöglichkeiten der Erfindung ergeben sich aus der nachfolgenden Beschreibung von Ausführungsbeispielen in Verbindung mit der Zeichnung. In der Zeichnung zeigt
- Figur 1: den Aufbau einer Übertragungsstrecke zwischen einem Teilnehmer und einer Vermittlungsstelle mit einem ersten Ausführungsbeispiel der Leitungsabschlußvorrichtung für eine Teilnehmeranschlußleitung nach der Erfindung;
- Figur 2: ein Blockschaltbild eines zweiten Ausführungsbeispiels der Leitungsabschlußvorrichtung nach der Erfindung;
- Figur 3A: ein erstes Diagramm mit der spektralen Verteilung von Sprach- und Datenband; und
- Figur 3B: ein zweites Diagramm mit der spektralen Verteilung von Sprach- und Datenband.
- Figur 4: eine Prinzipschaltung einer Leitungsabschlußvorrichtung für eine Teilnehmeranschlußleitung mit einer digitalen Splitter-Schaltung, die insbesondere zur Auftrennung des ISDN-Sprachbandes und des ADSL-Datenbandes geeignet ist;
- Figur 5: die Architektur eines vorteilhaften Ausführungsbeispiels einer digitalen Splitter-Schaltung für ADSL und ISDN gemäß Figur 4.

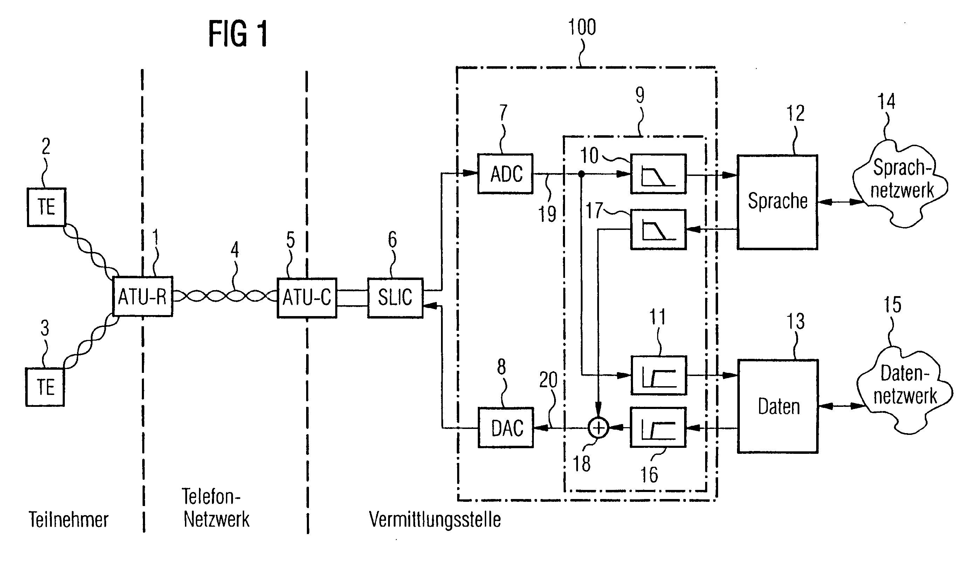

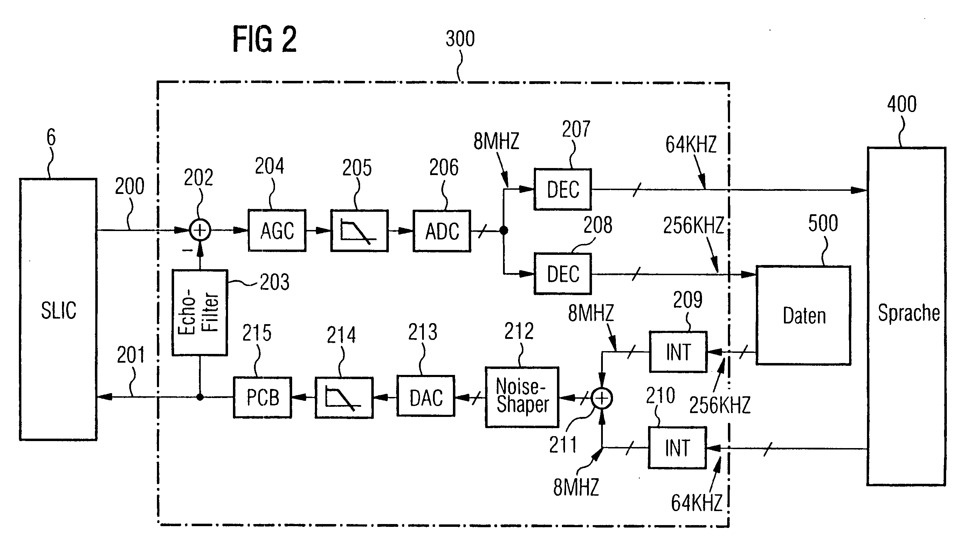

Die in Figur 1 und 2 dargestellten Ausführungsbeispiele zeigen die Anwendung der erfindungsgemäßen Leitungsabschlußvorrichtung beispielhaft in der Vermittlungsstelle. Eine Anwendung der Leitungabschlußvorrichtung beim Teilnehmer ist jedoch genauso möglich.

In Fig.1 sendet und empfängt ein Teilnehmer sowohl ein schmalbandiges niederfrequentes Sprachsignal mit einem analogen Teilnehmerendgerät 2, das beispielsweise ein Telefon oder ein Sprachband-Modem sein kann, als auch ein breitbandiges höherfrequentes Datensignal mit einem digitalen Teilnehmerendgerät 3, das beispielsweise ein Rechner mit einem ADSL-Modem sein kann, über eine Teilnehmeranschlußleitung 4, die aus einer Kupferdoppelader besteht, an eine Vermittlungsstelle. Dazu ist das analoge Teilnehmerendgerät 2 und das digitale Teilnehmerendgerät 3 jeweils über eine Zweidrahtleitung mit einem ersten Teilnehmeranschluß 1 (ATU-R = ADSL Transmission Unit - Remote) verbunden, wobei der erste Teilnehmeranschluß 1 mit der Teilnehmeranschlußleitung 4 verbunden ist.

In der Vermittlungsstelle ist die Teilnehmeranschlußleitung 4 mit einem zweiten Teilnehmeranschluß 5 (ATU-C = ADSL Transmission Unit - Central) verbunden. Der zweite Teilnehmeranschluß 5 ist wiederum über eine Zweidrahtleitung mit einer Teilnehmerleitungsschaltung 6 (SLIC = Subscriber line Interface) verbunden. Die Teilnehmerleitungsschaltung 6 dient zur elektrischen Anpassung an die Teilnehmeranschlußleitung 4 und wirkt als Gabelschaltung für die bidirektionale Teilnehmeranschlußleitung 4.

Mit der Teilnehmerleitungsschaltung 6 ist eine Leitungsabschlußvorrichtung 100 verbunden, die einen Analog-Digital-Umsetzer 7 (ADC = Analog-To-Digital-Converter), einen Digital-Analog-Umsetzer 8 (DAC = Digital-To-Analog-Converter) und einen digitalen POTS-Splitter 9 aufweist.

In einer ersten Übertragungsrichtung (Empfangsrichtung für die Leitungsabschlußvorrichtung) wird auf der Leitungsabschlußvorrichtung 100 ein breitbandiges analoges Signal von dem Analog-Digital-Umsetzer 7 in ein digitales Empfangssignal umgesetzt. Vorzugsweise wird dafür ein überabtastender Sigma-Delta-Analog-Digital-Umsetzer verwendet, da nur einfache Antialiasing-Filter niedriger Ordnung zur Bandbegrenzung benötigt werden.

Dem Analog-Digital-Umsetzer 7 sind in einem digitalen POTS-Splitter 9 parallel ein erstes digitales Tiefpaßfilter 10 und ein erstes digitales Hochpaßfilter 11 nachgeschaltet. Durch Programmierung der Filterkoeffizienten ist dabei die Filterfunktion einstellbar. Wird das erste digitale Tiefpaßfilter 10 und das erste digitale Hochpaßfilter 11 durch ein Programm in einem digitalen Signalprozessor realisiert, ist im Gegensatz zu einem festverdrahteten digitalen Filter durch Änderung des Programms, bei dem nur die Filterkoeffizienten einstellbar sind, auch die Ordnung des Filters einstellbar.

Das erste digitale Tiefpaßfilter 10 filtert aus dem Ausgangssignal des Analog-Digital-Umsetzers 7 ein erstes digitales Sprachsignal. Das erste digitale Hochpaßfilter 11 filtert aus dem Ausgangssignal des Analog-Digital-Umsetzers 7 ein erstes digitales Datensignal.

Das erste digitale Sprachsignal und das erste digitale Datensignal wird dann einer digitalen Sprachverarbeitung 12 bzw. digitalen Datenverarbeitung 13 zugeführt, die das erste digitale Sprachsignal bzw. das erste digitale Datensignal verarbeitet und in ein digitales Sprachnetzwerk 14 bzw. ein digitales Datennetzwerk 15 einspeist. Das digitale Sprachnetzwerk 14 und das digitale Datennetzwerk 15 verbinden entsprechende Vermittlungsstellen untereinander.

In einer zweiten Übertragungsrichtung (Senderichtung für die Leitungsabschlußvorrichtung) empfängt die digitale Sprachverarbeitung 12 und die digitale Datenverarbeitung 13 ein zweites digitales Sprachsignal bzw. ein zweites digitales Datensignal über das digitale Sprachnetzwerk 14 bzw. das digitale Datennetzwerk 15.

Die digitale Sprachverarbeitung 12 und die digitale Datenverarbeitung 13 führt das zweite digitale Sprachsignal bzw. das zweite digitale Datensignal einem zweiten digitalen Tiefpaßfilter 17 bzw. einem zweiten digitalen Hochpaßfilter 16 in dem digitalen POTS-Splitter-Filter 9 zu.

Dabei ist das zweite digitale Tiefpaßfilter 17 und das zweite digitale Hochpaßfilter 16 durch Programmierung der Filterkoeffizienten einstellbar. Wird das zweite digitale Tiefpaßfilter 17 und das zweite digitale Hochpaßfilter 16 durch ein Programm in einem digitalen Signalprozessor realisiert, ist im Gegensatz zu einem festverdrahteten digitalen Filter durch Änderung des Programms, bei dem nur die Filterkoeffizienten einstellbar sind, auch die Ordnung des Filters einstellbar.

Nach der Filterung wird das digitale Sprachsignal und das digitale Datensignal in einem digitalen Summierer 18 zu einem digitalen Sendesignal addiert und dem Digital-Analog-Umsetzer 8 zugeführt.

Der Digital-Analog-Umsetzer 8 setzt das digitale Sendesignal in ein analoges breitbandiges Sendesignal um, das der Teilnehmerleitungsschaltung 6 zum Senden über die Teilnehmeranschlußleitung 4 zugeführt wird.

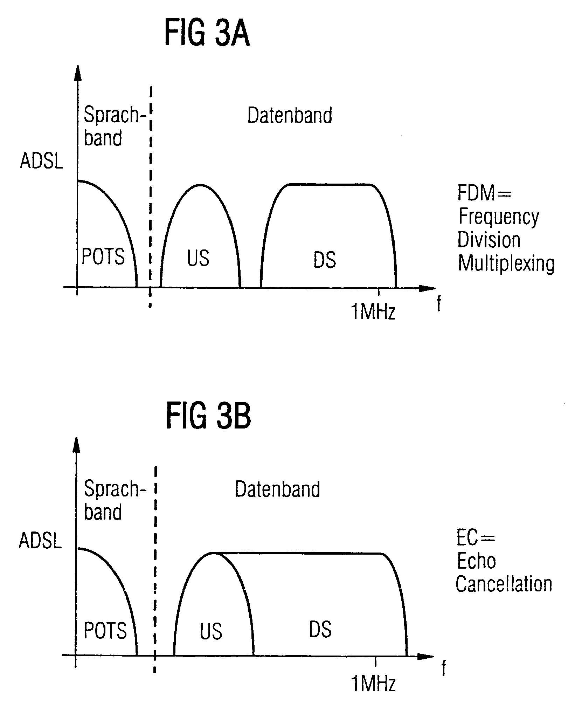

Die spektrale Verteilung auf der Teilnehmeranschlußleitung 4 bei einer Übertragung mit dem ADSL-Verfahren ist in Figur 3A und Figur 3B dargestellt.

Die Übertragungsbandbreite einer Kupferdoppelader (Zweidrahtleitung) beträgt ca. 1,1 MHz. Im einem unteren Frequenzbereich schematisch beginnend mit 0 Hz liegt das Sprachband (POTS). Oberhalb des Sprachbandes beginnt das Datenband, das sich in ein erstes US Frequenzband und ein zweites DS Frequenzband aufteilt. In dem ersten Frequenzband US (=Upstream-Frequenzband) werden Daten von einem Teilnehmer in eine Vermittlungsstelle übertragen; in dem zweiten Frequenzband DS (=Downstream-Frequenzband) werden Daten von der Vermittlungsstelle zum Teilnehmer übertragen. Das Upstream-Frequenzband ist schmaler als das Downstream-Frequenzband.

Die in Figur 3A dargestellte Aufteilung des Datenbandes in zwei getrennte Frequenzbänder und Datenübertragung in zwei getrennten Frequenzbändern US, DS wird als Frequency Division Multiplexing (FDM) bezeichnet. In Figur 3B ist ebenfalls die spektrale Verteilung des schmalbandigen Sprachbandes POTS und des breitbandigen Datenbandes bei dem ADSL-Datenübertragungsverfahren dargestellt, wobei das Datenband ein zusammenhängendes Frequenzband aufweist, das sowohl das Upstream-Frequenzband US als auch das Downstream-Frequenzband DS aufweist. Da sich das Upstream- und das Downstream-Frequenzband teilweise überlagern muß zur Trennung des Upstream- und Downstream-Frequenzbandes Echokompensation (EC=Echo Cancellation) angewendet werden. Der Vorteil bei einer Datenübertragung mit Echokompensation ist ein breiteres Downstream-Frequenzband, wodurch von der Vermittlungsstelle zum Teilnehmer eine höhere Datenrate ermöglicht wird.

In den in den Figuren 3A und 3B gezeigten Ausführungsbeispielen sind jeweils das POTS-Sprachband und das ADSL-Datenband vollständig voneinander getrennt, daß heißt die Frequenzbänder überschneiden sich nicht. Es wäre jedoch selbstverständlich auch denkbar, wenn sich Sprachband und Datenband leicht, zum Beispiel an deren oberen bzw. unteren grenzfrequenz überlappen.

In Figur 2 ist ein Blockschaltbild eines zweiten Ausführungsbeispiels der Leitungsabschlußvorrichtung für eine Teilnehmeranschlußleitung dargestellt.

Die Leitungsabschlußvorrichtung 300 ist über eine Empfangsleitung 200 und eine Sendeleitung 201 mit der Teilnehmerleitungsschaltung 6 verbunden.

Ein breitbandiges Empfangssignal, das von der Teilnehmerleitungsschaltung 6 über die Empfangsleitung 200 der Leitungsabschlußvorrichtung 300 zugeführt wird, wird einer analogen Summierschaltung 202 zugeführt. Die analoge Summierschaltung 202 subtrahiert vom Empfangssignal ein im Empfangssignal enthaltenes Sendesignal, was eine Echokompensation bewirkt. Dazu wird das Sendesignal durch ein Echo-Filter 203 gefiltert. Das Echo-Filter 203 filtert durch Hochpaßfilterung die in dem Sendesignal enthaltenen analogen Sprachsignale aus. Die Sprachsignale unterliegen somit nicht der Echokompensation. Das Echo-Filter 203 filtert mit einer Übertragungsfunktion, die der Übertragungsfunktion der angeschlossenen Kupferdoppelader entspricht. Das am Ausgang des Echo-Filters 7 anliegende Signal entspricht somit einem im Empfangssignal enthaltenen Echo-Signal des Sendesignals und wird durch die analoge Summierschaltung 202 vom Empfangssignal subtrahiert.

Der analogen Summierschaltung ist eine automatische Verstärkungsregelung 204 (AGC = Automatic Gain Control) nachgeschaltet. Am Eingang der liegt das nicht echokompensierte Sprachsignal und das echokompensierte Datensignal an. Die automatische Verstärkungsregelung 204 regelt die Amplitude des teilechokompensierten Empfangssignales für die Weiterverarbeitung so, daß Frequenzen des Datenbandes, die eine geringe spektrale Leistung aufweisen, verstärkt werden.

Der automatischen Verstärkungsregelung 204 ist ein Antialiasing-Filter 205 zur Bandbegrenzung nachgeschaltet, das alle Frequenzen oberhalb des Upstream-Frequenzbandes des Datenbandes entsprechend der Abtastrate eines nachgeschalteten Analog-Digital-Umsetzers ausfiltert.

Dem Antialiasing-Filter 205 ist ein überabtastender Sigma-Delta-Analog-Digital-Umsetzer 206 nachgeschaltet, der das echokompensierte, amplitudengeregelte und bandbegrenzte Empfangssignal in ein digitales Empfangssignal, dargestellt durch einen 1-Bit-Datenstrom mit einer Abtastrate von 8 MHz, umsetzt.

Das digitale Empfangssignal wird einem ersten Dezimationsfilter 207 und parallel einem zweiten 208 Dezimationsfilter zugeführt.

Das erste Dezimationsfilter 207 führt eine digitale Tiefpaßfilterung mit dem digitalen Empfangssignal durch und verringert dann die Abtastrate von 8 MHz durch Dezimation auf eine Abtastrate von 64 kHz, so daß ein 1-Bit-Datenstrom mit 64 kHz Abtastrate (64 kbps-Datenstrom) am Ausgang des ersten Dezimationfilters 207 anliegt. Dieser 64 kbps-Datenstrom ist zur weiteren Sprachverarbeitung und Einspeisung in das digitale Sprachnetz geeignet. Die Grenzfrequenz der digitalen Tiefpaßfilterung ist so eingestellt, daß aus dem digitalen Empfangssignal das Datenband weggefiltert wird und nur das Sprachband übrigbleibt. Der am Ausgang des ersten Dezimationsfilters 207 anliegende 64 kbps-Datenstrom wird dann einer digitalen Sprachverarbeitungseinrichtung 400 zugeführt.

Das zweite Dezimationsfilter 208 führt ebenfalls eine Tiefpaßfilterung mit dem digitalen Empfangssignal durch und verringert dann die Abtastrate von 8 MHz auf eine Abtastrate von 256 kHz, so daß am Ausgang des zweiten Dezimationsfilters 208 ein 1-Bit-Datenstrom mit 256 kHz (256 kbps-Datenstrom) anliegt. Dabei liegt die Grenzfrequenz der Tiefpaßfilterung über der höchsten Frequenz des Datenbandes. Der am Ausgang des zweiten Dezimationsfilters 208 anliegende 256 kbps-Datenstrom wird einer Datenverarbeitungseinrichtung 500 zur Weiterverarbeitung zugeführt. Die Datenverarbeitungseinrichtung 500 kann den 256 kbps-Datenstrom einer Hochpaßfilterung zuführen, um noch vorhandene Reste des digitalen Sprachsignales wegzufiltern.

Die Verarbeitung eines Sendesignals durch die Leitungsabschlußvorrichtung 300 wird im folgenden beschrieben.

Ein zu sendendes digitales Sprachsignal, dargestellt durch einen 1-Bit-Datenstrom mit einer Abtastrate von 64 kHz, wird von der Sprachverarbeitungseinrichtung 400 einem ersten Interpolationsfilter 210 in der Leitungsabschlußvorrichtung 300 zugeführt. Das erste Interpolationsfilter 210 erhöht die Abtastrate von 64 kHz des digitalen Sprachsignals auf eine Abtastrate von 8 MHz zur Weiterverarbeitung.

Ein zu sendenden digitales Datensignal, dargestellt durch einen 1-Bit-Datenstrom mit 256 kHz, wird von der Datenverarbeitungseinrichtung 500 einem zweiten Interpolationsfilter 209 in der Leitungsabschlußvorrichtung 300 zugeführt. Das zweite Interpolationsfilter 209 erhöht die Abtastrate von 256 kHz des digitalen Datensignals ebenfalls auf die Abtastrate von 8 MHz zur Weiterverarbeitung.

Nach der Interpolation weisen das digitale Sprachsignal und das digitale Datensignal diesselbe Abtastrate von 8 MHz auf. Beide Signale werden einem digitalen Summierer 211 zugeführt, der ein digitales Sendesignal durch Addition des digitalen Sprachsignals und des digitalen Datensignals erzeugt.

Das digitale Sendesignal wird einem digitalen Noise-Shaper-Filter 212 zugeführt, der das im digitalen Sendesignal enthaltene Quantisierungsrauschen unterdrückt. Ferner paßt das Noise-Shaper-Filter 212 die Wortbreite des digitalen Sendesignals an die Verarbeitungswortbreite eines nachgeschalteten Digital-Analog-Umsetzers 213 an.

Das so gefilterte digitale Sendesignal wird dann von dem Digital-Analog-Umsetzer 213 in ein analoges breitbandiges Sendesignal umgesetzt, das von einem dem Digital-Analog-Umsetzer 213 nachgeschalteten Tiefpaßfilter 214 gefiltert wird. Die Grenzfrequenz des Tiefpaßfilters 214 liegt dabei über der höchsten Frequenz des Datenbandes. Das Tiefpaßfilter 214 filtert Störfrequenzen oberhalb des zur Übertragung genutzten Spektrums.

Mit einer dem Tiefpaßfilter 214 nachgeschalteten Leistungsanpassungsschaltung 215 (PCB = Power Cutback) wird die spektrale Leistungsverteilung des breitbandigen Sendesignals zur Weiterverarbeitung in der Teilnehmerleitungsschaltung 6, der das breitbandige Sendesignal über die Sendeleitung 201 zugeführt wird, angepaßt. Insbesondere bei kurzen Leitungslängen der Teilnehmerleitung wird die spektrale Leistung des breitbandigen Sendesignals zurückgenommen, um die Verlustleistung zu begrenzen und Aussteuerprobleme zu vermeiden.

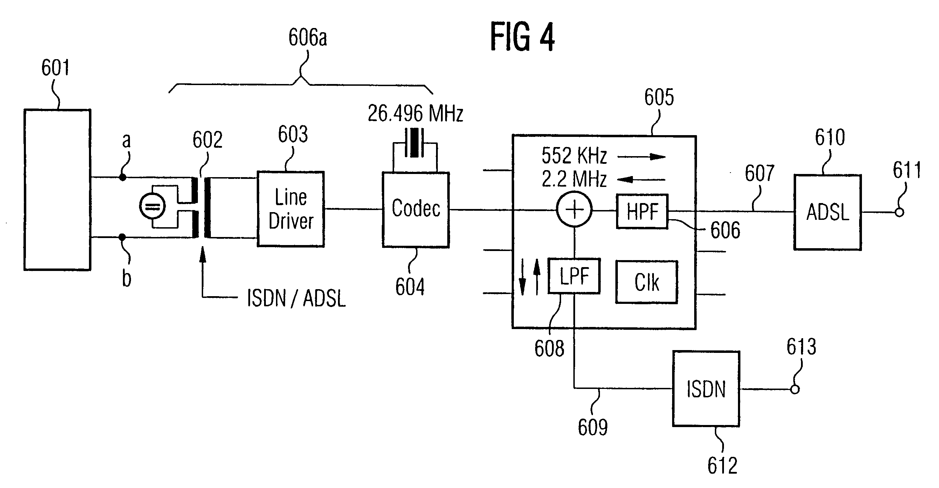

Figur 4 zeigt die Prinzipschaltung einer Leitungsabschlußvorrichtung für eine Teilnehmeranschlußleitung mit einer digitalen Splitter-Schaltung, die insbesondere zur Auftrennung des ISDN-Sprachbandes und des ADSL-Datenbandes geeignet ist.

Die Leitungsabschlußvorrichtung ist über zwei Kupferdrähte a, b mit dem Telefonnetzwerk 601 verbunden. Über diese Kupferdoppeladern des POTS werden Sprach- und Datensignale über einen ISDN/ADSL-Übertrager 602 in die Leitungsabschlußvorrichtung eingekoppelt. Dieser Übertrager 602 ist über eine Leitungstreiberschaltung 603 (Line Driver) und einem Codec 604 mit einer digitalen ISDN-Splitterschaltung 605 (DISC = Digital ISDN Splitter Circuit) verbunden. Der Codec 604 wird dabei durch einen von außen zugeführten Takt von 24,496 MHz getaktet. Der ISDN/ADSL-Übertrager 2, die Leitungstreiberschaltung 603 und der Codec 604 bilden dabei die gemeinsame Frontend-Schnittstelle 606a der Leitungsabschlußvorrichtung. Im vorliegenden Ausführungsbeispiel ist lediglich ein einziger Kanal der ISDN-Splitterschaltung 605 in der Figur 4 dargestellt worden, jedoch kann die ISDN-Splitterschaltung 605 wie dies auch angedeuted wurde mehrkanalig ausgebildet werden. Übertrager 602, Leitungstreiberschaltung 603, Codec 604 und ISDN-Splitterschaltung 605 können vorteilhafterweise auf einem einzigen Chip integriert sein oder auch mit mehreren Chipsätzen realisiert werden.

Die ISDN-Splitterschaltung 605 enthält Mittel zum Auftrennen der ADSL-Daten und der ISDN-Sprachdaten. Zu diesem Zweck ist ein Hochpaßfilter 606 in dem für die ADSL-Daten vorgesehenen Pfad 607 und ein Tiefpaßfilter 608 in dem für die ISDN-Sprachdaten vorgesehenen Pfad 609 vorgesehen. Ferner ist ein ADSL-Transceiver-Modul 610 zwischen der ISDN-Splitterschaltung 605 und der ADSL-Datenschnittstelle 611 angeordnet. Darüber hinaus ist ein ISDN-Transceiver-Modul 612 zwischen der ISDN-Splitterschaltung 605 und der PCM-Schnittstelle 613 vorgesehen. Darüberhinaus sind in der ISDN-Splitterschaltung 605 auch Mittel 614 zur Systemtaktgenerierung bzw. Takteinkopplung vorgesehen.

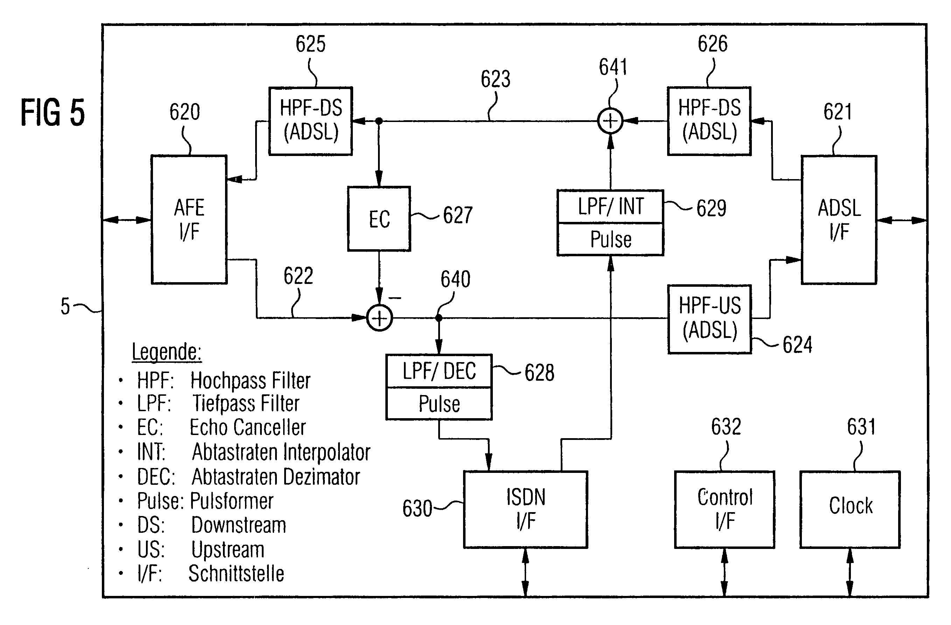

Figur 5 zeigt die Architektur eines vorteilhaften Ausführungsbeispiels der erfindungsgemäßen digitalen Splitter-Schaltung 5 für ADSL und ISDN gemäß Figur 4.

Die Schnittstelle des analogen Frontends 620 ist hier mit der ADSL-Schnittstelle 621 jeweils über einen Upstream-Signalpfad 622 und einem Downstream-Signalpfad 623 verbunden. In jedem dieser Signalpfade ist mindestens ein ADSL-Hochpaßfilter 624, 625, 626 angeordnet. Zusätzlich ist ein sogenannter Echo Canceller 627 zwischen den beiden ADSL-Signalpfaden 622, 623 vorgesehen. In Figur 5 sind im Downstream-Signalpfad 623 jeweils zwei ADSL-Hochpaßfilter 625, 626 vorgesehen, wobei es auch denkbar wäre, hier lediglich einen einzigen ADSL-Hochpaßfilter 625, 626 anzuordnen. Dessen Lage könnte dann im wesentlichen frei vor oder nach dem Echo Canceller 627 gewählt werden.

Der Echo Canceller 627 in Figur 5, der das Übertragungsverhalten auf der Teilnehmerseite modelliert, dient der Grobkorrektur und läßt sich typischerweise nur bei einem gemeinsamen ADSL-/ISDN-Betrieb trainieren. Die ADSL- und ISDN-Schnittstellen 621, 630 weisen jeweils eigene Echo Canceller auf (in Figur 5 nicht dargestellt), die der Feinkorrektur dienen und die typischerweise bei jedem neuen Verbindungsaufbau wieder neu trainiert werden können.

Ferner sind die beiden ADSL-Signalpfade 622, 623 jeweils über eine Tiefpaßfilter-Schaltungen 628, 629 mit der ISDN-Schnittstelle 630 verbunden. Dabei ist die Tiefpaßfilter-Schaltung 628, die zwischen ISDN-Schnittstelle 630 und ADSL-Upstream-Signalpfad 622 angeordnet ist, mit einem Abtastraten Dezimator (DEC) und einem nachgeschalteten Pulsformer zur Verringerung der Pulsfrequenz für die nachgeschaltete ISDN-Schnittstelle 630 versehen. Mittels des Tiefpaßfilter 628 wird das ISDN-Datenband von dem ADSL-Datenband am Auftrennpunkt 640 voneinander getrennt. Umgekehrt ist die Tiefpaßfilter-Schaltung 629, der zwischen der ISDN-Schnittstelle 630 und dem ADSL-Downstream-Signalpfad 623 angeordnet ist, einen vorgeschalteten Pulsformer und einen diesem nachgeschalteten Abtastraten-Interpolator versehen. Mittels der Tiefpaßfilter-Schaltung 629 wird das ISDN-Sprachband dem im Downstream-Pfad 623 von der ADSL-Schnittstelle 621 übermittelten ADSL-Datenband am Summationspunk 640 überlagert und der Schnittstelle des analogen Frontends 620 zugeführt.

Zusätzlich weist die erfindungsgemäße ISDN-Splitterschaltung 605 auch eine Schnittstelle 631 zur Takteinkopplung und eine Schnittstelle 632 zur Steuersignaleinkopplung auf.

Die in den Figuren 4 und 5 dargestellte ISDN-Splitter-schaltungen 5 können selbstverständlich auch auf einfache Weise derart abgewandelt werden, daß sie sich statt zur Trennung von ADSL-Daten und ISDN-Sprache zur Trennung von ADSL-Daten und POTS-Sprache eignet. Gleichermaßen wurde in den vorangegangenen Ausführungsbeispiel immmer von ADSL-Daten ausgegangen. Es ist jedoch selbstverständlich, daß die vorliegende Erfindung sich sehr vorteilhaft auf alle denkbaren xDSL-Übertragungsverfahren anwenden läßt. Hierzu wären die Schaltungen entsprechend den Figuren 4 und 5 lediglich im Rahmen des einem Fachmann geläufgen Kenntnisse abzuwandeln, indem beispielsweise die Grenzfrequenzen der Filter geeignet dimensioniert werden.

Die vorliegende Erfindung eignet sich insbesondere für solche Leitungsabschlußvorrichtungen, die geeignet sind ADSL über ISDN- oder POTS-Dienste, wie sie von verschiedenen Netzbetreibern wie der Deutschen Telekom angeboten werden, zu realisieren.

## Patentansprüche

1. Leitungsabschlussvorrichtung für eine Teilnehmeranschlussleitung, die breitbandige Signale über eine einzige Teilnehmeranschlussleitung (4) sendet und empfängt, wobei sich ein breitbandiges Signal aus einem breitbandigen oder schmalbandigen niederfrequenten Sprachsignal (ISDN, POTS) und einem breitbandigen höherfrequenten Datensignal (US, DS; ADSL) zusammensetzt und sich die Frequenzbänder des Sprachsignals (ISDN, POTS) und des Datensignals (US, DS; ADSL) im Wesentlichen nicht überschneiden,
**dadurch gekennzeichnet,**
**dass** eine digitale Frequenzweiche vorgesehen ist, die das niederfrequente Sprachsignal (ISDN, POTS) und das höherfrequente Datensignal (US, DS; ADSL) voneinander trennt und; die digitale Frequenzweiche mindestens ein programmierbares digitales Filter aufweist; die digitale Frequenzweiche im Digitalteil der Leitungsabschlussvorrichtung angeordnet ist,
wobei die digitale Frequenzweiche (9; 207 - 212; 605) einen ersten Echocanceller (EC) aufweist, der zwischen einem Upstream-Signalpfad (622) und einem Downstream-Signalpfad (623) angeordnet ist,
wobei der erste Echocanceller (EC) zur Grobkorrektur vorgesehen ist und ein durch die digitale Frequenzweiche (9; 207 - 212; 605) rückgekoppeltes Störsignal herausfiltert; und
wobei die Schnittstellen (621, 630) zu den Transceiververschaltungen für das niederfrequente Sprachsignal (ISDN, POTS) und höherfrequenten Datensignal (US, DS; ADSL) und/oder die Transceiververschaltungen selbst jeweils mindestens einen weiteren zweiten Echocanceller aufweisen, der zur Feinkorrektur der jeweils rückgekoppelten Störsignale dient.

2. Leitungsabschlußvorrichtung nach Anspruch 1,
**dadurch gekennzeichnet, daß**
- ein Analog-Digital-Umsetzer (7; 206) vorgesehen ist, der ein breitbandiges Empfangssignal in ein digitales Empfangssignal umsetzt,
- ein Digital-Analog-Umsetzer (8; 213) vorgesehen ist, der ein digitales Sendesignal in ein breitbandiges Sendesignal umsetzt, und
- die digitale Frequenzweiche (9; 207 - 212; 605) dem Analog-Digital-Umsetzer (7; 206) nachgeschaltet und dem Digital-Analog-Umsetzer (8; 213) vorgeschaltet ist und das digitale Empfangssignal in ein erstes digitales Sprachsignal und ein erstes digitales Datensignal auftrennt sowie ein zweites digitales Sprachsignal und ein zweites digitales Datensignal zu dem digitalen Sendesignal zusammenführt.

3. Leitungsabschlußvorrichtung nach einem der vorstehenden Ansprüche,
**dadurch gekennzeichnet, daß**
- die digitale Frequenzweiche (9; 207 - 212; 605) ein erstes digitales Tiefpaßfilter (10) und ein erstes digitales Hochpaßfilter (11) aufweist, wobei dem ersten digitalen Tiefpaßfilter (10) und dem ersten digitalen Hochpaßfilter (11) das digitale Empfangssignal (19) zugeführt wird und daß
- die digitale Frequenzweiche (9; 207 - 212; 605) ein zweites digitales Tiefpaßfilter (17) und ein zweites digitales Hochpaßfilter (16) und einen digitalen Summierer (18) aufweist, wobei das zweite digitale Sprachsignal dem zweiten digitalen Tiefpaßfilter (17) und das zweite digitale Datensignal dem zweiten digitalen Hochpaßfilter (16) zugeführt wird und der digitale Summierer (18) das Ausgangssignal des zweiten digitalen Tiefpaßfilters (17) und des zweiten digitalen Hochpaßfilters (16) zu dem digitalen Sendesignal (20) addiert.

4. Leitungsabschlußvorrichtung nach Anspruch 3,
**dadurch gekennzeichnet,**
**daß** das erste digitale Tiefpaßfilter (10) eine erste Reihenschaltung von mindestens einem ersten Dezimationsfilter (207) und das erste digitale Hochpaßfilter (11) eine zweite Reihenschaltung von mindestens einem zweiten Dezimationsfilter (208) aufweist.

5. Leitungsabschlußvorrichtung nach Anspruch 3 oder 4,
**dadurch gekennzeichnet,**
**daß** das zweite digitale Tiefpaßfilter (17) eine dritte Reihenschaltung von mindestens einem ersten Interpolationsfilter (210) und das zweite digitale Hochpaßfilter (16) eine vierte Reihenschaltung von mindestens einem zweiten Interpolationsfilter (209) aufweist.

6. Leitungsabschlußvorrichtung nach nach einem der vorstehenden Ansprüche,
**dadurch gekennzeichnet,**
**daß** die digitale Frequenzweiche (9; 207 - 212; 605) einen einem digitalen Summierer (211) nachgeschaltetes Noise-Shaper-Filter (212) aufweist.

7. Leitungsabschlußvorrichtung nach einem der vorstehenden Ansprüche,
**dadurch gekennzeichnet,**
**daß** als Analog-Digital-Umsetzer (10) ein überabtastender Sigma-Delta Analog-Digital-Umsetzer vorgesehen ist.

8. Leitungsabschlußvorrichtung nach einem der vorstehenden Ansprüche,
**dadurch gekennzeichnet,**
**daß** dem Analog-Digital-Umsetzer (206) eine automatische Verstärkungskontrollschaltung (204) zur Regelung der Amplitude des empfangenen breitbandigen analogen Signals vorgeschaltet ist.

9. Leitungsabschlußvorrichtung nach einem der vorstehenden Ansprüche,
**dadurch gekennzeichnet,**
**daß** dem Digital-Analog-Umsetzer (213) eine Leistungsanpassungschaltung (215) zur Anpassung der spektralen Leistungsverteilung nachgeschaltet ist.

10. Leitungsabschlußvorrichtung nach einem der vorstehenden Ansprüche,
**dadurch gekennzeichnet,**
**daß** das breitbandige niederfrequente Sprachsignal ein ISDN-Sprachsignal ist und das breitbandige höherfrequente Datensignal ein ADSL-Datensignal ist.

11. Leitungsabschlußvorrichtung nach einem der Ansprüche 1 bis 9,
**dadurch gekennzeichnet,**
**daß** das breitbandige niederfrequente Sprachsignal ein POTS-Sprachsignal ist und das breitbandige höherfrequente Datensignal ein ADSL-Datensignal ist.

12. Leitungsabschlußvorrichtung nach einem der vorstehenden Ansprüche,
**dadurch gekennzeichnet,**
**daß** die digitale Frequenzweiche (9; 207 - 212; 605) mehrkanalig ausgebildet ist, wobei über die Vielzahl der Kanäle jeweils niederfrequente POTS- und/oder ISDN-Sprachsignale und breitbandige höherfrequente ADSL-Datensignale übertragbar sind.

13. Leitungsabschlussvorrichtung nach einem der vorhergehenden Ansprüche,
**dadurch gekennzeichnet,**
**dass** Echocanceller (EC) in der digitalen Frequenzweiche (9; 207 - 212; 605) sich nur bei einem gemeinsamen Betrieb von niederfrequenten Sprachsignal (ISDN, POTS) und höherfrequenten Datensignal (US, DS; ADSL) trainieren lässt.

14. Leitungsabschlussvorrichtung nach einem der vorstehenden Ansprüche,
**dadurch gekennzeichnet,**
**dass** in der digitalen Frequenzweiche (9; 207 - 212; 605) zur Trennung des niederfrequenten Sprachsignals (ISDN, POTS) von dem höherfrequenten Datensignal (US, DS; ADSL) eine Tiefpassfilter-Schaltung (628) vorgesehen ist, die ein Abtastraten-Dezimator und einen diesem nachgeschalteten Pulsformer enthält und die mit einer Schnittstelle (630) zu einem zur Verarbeitung von niederfrequenten Sprachsignalen (ISDN, POTS) geeigneten Transceiver verbunden ist.

15. Leitungsabschlußvorrichtung nach einem der vorstehenden Ansprüche,
**dadurch gekennzeichnet,**
**daß** in der digitalen Frequenzweiche (9; 207 - 212; 605) eine weitere Tiefpaßfilter-Schaltungen (628) vorgesehen ist, die vorgeschalteten Pulsformer und einen ein Abtastraten Integrator enthält und die mit einer Schnittstelle (630) zu einem zur Verarbeitung von niederfrequenten Sprachsignalen (ISDN, POTS) geeigneten Transceiver verbunden ist, wobei die Tiefpaßfilter-Schaltungen (628) ausgangsseitig das niederfrequenten Sprachsignals (ISDN, POTS) bereitstellt, das dem höherfrequenten Datensignal (US, DS; ADSL) überlagert wird.

16. Leitungsabschlußvorrichtung nach einem der vorstehenden Ansprüche,
**dadurch gekennzeichnet,**
**daß** die digitale Frequenzweiche (9; 207 - 212; 605) zusammen mit einem Übertrager (602), einer Leitungstreiberschaltung (603), und einer Codec-Schaltung (604) auf einem einzigen Chip integriert sind.

17. Leitungsabschlußvorrichtung nach einem der vorstehenden Ansprüche,
**dadurch gekennzeichnet,**
**daß** die digitale Frequenzweiche (9; 207 - 212; 605) mindestens eine Sampleraten-Adaptionsstufe sowie eine Taktsynchronisationseinheit aufweist, mit denen sichergestellt wird, daß die Sample-Raten der jeweiligen Signalströme am Summationspunkt (641) bzw. bei der Auftrennpunkt (640) gleich groß sind.

## Claims

1. A line termination device for a subscriber line transmitting and receiving broadband signals over a single subscriber line (4), wherein a broadband signal consists of a broadband or narrowband low frequency voice signal (ISDN, POTS) and a broadband an higher frequency data signal (US, DS; ADSL) and wherein the frequency bands of the voice signal (ISDN, POTS) and the data signal (US, DS; ADSL) substantially do not overlap,
**characterized in that**
a digital frequency separating filter is provided, which separates a low frequency voice signal (ISDN, POTS) from the high frequency data signal (US, DS; ADSL) and that the digital frequency separating filter comprises at least a programmable digital filter, the digital frequency separating filter being provided in the digital part of the line termination device,
wherein the digital frequency separating filter (9; 207-212; 605) comprises a first echo compensator (EC) being arranged between an upstream signal path (622) and a downstream signal path (623),
wherein the first echo compensator (EC) is provided for a course correcture and filters out an interference signal feeded back by the digital frequency separating filter (9; 207-212; 605); and
wherein the interfaces (621, 630) to the transceiver circuits for the low frequency voice signal (IDDN, POTS) and the high frequency data signal (US, DS; ADSL) and/or the transceiver circuits are comprising each at least a second echo compensator provided for a fine correction of the respective back feeded interference signals.

2. The line termination device according to claim 1,
**characterized in that**
- an analog-digital convertor (7; 206) is provided converting a broad band received signal to a digital received signal,
- a digital-analog convertor (8; 213) is provided converting a digital transmission signal to a broadband transmission signal, and
- the digital frequency separating filter (9; 207-212; 605) is postconnected to the analog-digital convertor (7; 206) and preconnected to the digital-analog convertor (8; 213) and separates the digital received signal into a first digital voice signal and a first digital data signal and combines a second digital voice signal and a second digital data signal to a digital transmission signal.

3. The line termination device according to one of the preceeding claims,
**characterized in that**
- the digital frequency separating filter (9; 207-212; 605) comprises a first digital lowpass filter (10) and a first digital highpass filter (11),
wherein the digital received signal (19) is passed to the first digital lowpass filter (10) and the first digital highpass filter (11) and that
- the digital frequency separating filter (9; 207-212; 605) comprises a second digital lowpass filter (17) and a second digital highpass filter (16) and a digital adder (18), wherein the second digital voice signal is passed to the second digital lowpass filter (17) and the second digital data signal is passed to the second digital highpass filter (16) and the digital adder (18) adds the output signal of the second digital lowpass filter (17) in the output signal of the second digital highpass filter (16) to the digital transmission signal (20).

4. The line termination device according to claim 3,
**characterized in that**
the first digital lowpass filter (10) comprises a first series connection of at least a first decimation filter (207) and the first digital highpass filter (11) comprises a second series connection of at least a second decimation filter (208).

5. The line termination device according to claim 3 or 4,
**characterized in that**
the second digital lowpass filter (17) comprises a third series connection of at least a first interpolation filter (210) and the second digital highpass filter (16) comprises a fourth series connection of at least a second interpolation filter (209).

6. The line termination device according to one of the preceeding claims,
**characterized in that**
the digital frequency separating filter (9; 207-212; 605) comprises a noise-shaper filter (212) post-connected to a digital adder (211).

7. The line termination device according to one of the preceeding claims,
**characterized in that**
an oversampling sigma-delta analog-digital convertor is provided as analog-digital convertor (10).

8. The line termination device according to one of the preceeding claims,
**characterized in that**
an automatic amplifyer control circuit (204) is preconnected to the analog-digital convertor (206) for controlling the amplitude of the received broadband analog signal.

9. The line termination device according to one of the preceeding claims,
**characterized in that**
a power adaption circuit (215) is post-connected to the digital-analog convertor (213) for adapting the spectral power distribution.

10. The line termination device according to one of the precedings claims,
**characterized in that**
the broadband low frequency voice signal is an ISDN-voice signal and the broadband higher frequency data signal is a ADSL data signal.

11. The line termination device according to claim 1 to 9,
**characterized in that**
the broadband low frequency signal is a POTS-voice signal and the broadband high frequency data signal is an ADSL-data signal.

12. The line termination device according to one of the preceeding claims,
**characterized in that**
a digital frequency separating filter (9; 207-212; 605) is designed with a plurality of channels wherein respective low frequency POTS-and/or ISDN voice signals and broadband high frequency ADSL-data signals are transmittable over said plurality of channels.

13. The line termination device according to one of the preceeding claims,
**characterized in that**
the echo compensator (EC) in the digital frequency separating filter (9; 207-212; 605) is only trainable in a joined operation of the low frequency voice signal (ISDN, POTS) and the high frequency data signal (US, DS; ADSL).

14. The line termination device according to one of the preceeding claims,
**characterized in that**
a lowpass filter circuit (628) is provided in the digital frequency separating filter (9; 207-212; 605) for separating a low frequency voice signal (ISDN, POTS) of the high frequency data signal (US, DS; ADSL), wherein the lowpass filter circuit (628) comprises a sampling decimator and pulse former postconnected to the sampling rate decimator and the lowpass filter circuit (628) is connected to an interface (630) to a transceiver suitable for processing low frequency voice signals (ISDN, POTS).

15. The line termination device according to one of the preceeding claims,
**characterized in that**
a further lowpass filter circuit (628) is arranged in the digital frequency seperating filter (9; 207-212; 605), the further lowpass filter circuit comprising a preconnected puls former and a sampling rate integrator and being connected via an interface (630) to a transceiver suitable for processing low frequency voice signals (ISDN, POTS), wherein the lowpass filter circuit (628) provides the low frequency voice signals (ISDN, POTS) at its output, wherein the low frequency voice signals are superimposed to the higher frequency data signal (US, DS; ADSL).

16. The line termination device according to one of the preceeding claims,
**characterized in that**
the digital frequency separating filter (9; 207-212; 605) is integrated on a single chip together with a transmitter (602), a line driver circuit (603) and a codec circuit (604).

17. The line termination device according to one of the preceeding claims,
**characterized in that**
the digital frequency separating filter (9; 207-212; 605) comprises at least a sample rate adaption unit and a clock synchronization unit, which ensure that the sample rate of the respective signal currents are of equal value at the adding point (641) and the separation point (640), respectively.

## Revendications

1. Dispositif de terminaison de ligne pour une ligne d'usager qui envoie et reçoit des signaux à large bande via une ligne d'usager (4) unique, un signal à large bande comprenant un signal vocal basse fréquence, à large bande ou à bande étroite (ISDN, POTS) et un signal de données à plus haute fréquence, à large bande (US, DS ; ADSL), les bandes de fréquence du signal vocal (ISDN, POTS) et du signal de données (US, DS ; ADSL) ne se chevauchant quasiment pas, **caractérisé en ce qu'** un diviseur de fréquence numérique est prévu qui sépare le signal vocal basse fréquence (ISDN, POTS) du signal de données à plus haute fréquence (US, DS ; ADSL) ; et que le diviseur de fréquence numérique comprend au moins un filtre numérique programmable; le diviseur de fréquence numérique étant disposé dans la partie numérique du dispositif de terminaison de ligne,
le diviseur de fréquence (9 ; 207 - 212 ; 605) comprenant un premier correcteur d'écho (EC) disposé entre un chemin de signal Upstream (622) et un chemin de signal Downstream (623),
le premier correcteur d'écho (EC) étant prévu pour corriger grossièrement et filtrant un signal parasite réinjecté par le diviseur de fréquence numérique (9; 207-212 ; 605) ; et
les interfaces (621, 630) vers les circuits récepteur-émetteur pour le signal vocal basse fréquence (ISDN, POTS) et le signal de données à plus haute fréquence (US, DS ; ADSL) et/ou les circuits récepteur-émetteur eux-mêmes comprenant, à chaque fois, au moins un deuxième autre correcteur d'écho servant à la correction fine des signaux parasites à chaque fois réinjectés.

2. Dispositif de terminaison de ligne selon la revendication 1,
**caractérisé en ce qu'**
- un convertisseur analogique-numérique (7 ; 206) est prévu qui convertit un signal de réception à large bande en un signal de réception numérique,
- un convertisseur numérique-analogique (8 ; 213) est prévu qui convertit un signal d'émission numérique en un signal d'émission à large bande, et
- le diviseur de fréquence numérique (9 ; 207 - 212; 605) est connecté en aval du convertisseur analogique-numérique (7; 206) et en amont du convertisseur numérique-analogique (8 ; 213), il sépare le signal de réception numérique en un premier signal vocal numérique et un premier signal de données numérique et il réunit un deuxième signal vocal numérique et un deuxième signal de données numérique pour obtenir le signal d'émission numérique.

3. Dispositif de terminaison de ligne selon l'une quelconque des revendications précédentes,
**caractérisé en ce que**
- le diviseur de fréquence (9 ; 207 - 212 ; 605) numérique comprend un premier filtre passe-bas (10) numérique et un premier filtre passe-haut (11) numérique, le signal de réception numérique (19) étant envoyé au premier filtre passe-bas (10) numérique et au premier filtre passe-haut (11) numérique et que
- le diviseur de fréquence (9 ; 207 - 212 ; 605) numérique comprend un deuxième filtre passe-bas (17) numérique et un deuxième filtre passe-haut (16) numérique et un additionneur numérique (18), le deuxième signal vocal numérique étant envoyé au deuxième filtre passe-bas (17) numérique et le deuxième signal de données numérique étant envoyé au deuxième filtre passe-haut (16) numérique, et l'additionneur numérique (18) additionne le signal de sortie du deuxième filtre passe-bas numérique (17) et du deuxième filtre passe-haut (16) numérique pour obtenir le signal d'émission numérique (20).

4. Dispositif de terminaison de ligne selon la revendication 3,
**caractérisé en ce que**
le premier filtre passe-bas numérique (10) comprend un premier circuit en série comprenant au moins un premier filtre de décimation (207) et le premier filtre passe-haut numérique (11) comprend un deuxième circuit en série comprenant au moins un deuxième filtre de décimation (208).

5. Dispositif de terminaison de ligne selon la revendication 3 ou 4,
**caractérisé en ce que**
le deuxième filtre passe-bas numérique (17) comprend un troisième circuit en série comprenant au moins un premier filtre d'interpolation (210) et le deuxième filtre passe-haut numérique (16) comprend un quatrième circuit en série comprenant au moins un deuxième filtre d'interpolation (209).

6. Dispositif de terminaison de ligne selon l'une quelconque des revendications précédentes,
**caractérisé en ce que**
le diviseur de fréquence numérique (9 ; 207 - 212 ;605) comprend un filtre Noise-Shaper (212) connecté en aval d'un additionneur numérique (211).

7. Dispositif de terminaison de ligne selon l'une quelconque des revendications précédentes,
**caractérisé en ce qu'**
un convertisseur analogique-numérique de type sur-échantillonneur Sigma-Delta est prévu comme convertisseur analogique-numérique (10).

8. Dispositif de terminaison de ligne selon l'une quelconque des revendications précédentes,
**caractérisé en ce qu'**
un circuit de contrôle d'amplification (204) automatique, pour régler l'amplitude du signal analogique à large bande reçu, est connecté en amont du convertisseur analogique-numérique (206).

9. Dispositif de terminaison de ligne selon l'une quelconque des revendications précédentes,
**caractérisé en ce qu'**
un circuit d'adaptation de puissance (215), pour adapter la distribution de puissance spectrale, est connecté en aval du convertisseur numérique-analogique (213).

10. Dispositif de terminaison de ligne selon l'une quelconque des revendications précédentes,
**caractérisé en ce que**
le signal vocal basse fréquence, à large bande est un signal vocal ISDN et le signal de données à plus haute fréquence, à large bande est un signal de données ADSL.

11. Dispositif de terminaison de ligne selon l'une des revendications 1 à 9,
**caractérisé en ce que**
le signal vocal basse fréquence, à large bande est un signal vocal POTS et le signal de données à plus haute fréquence, à large bande est un signal de données ADSL.

12. Dispositif de terminaison de ligne selon l'une quelconque des revendications précédentes,
**caractérisé en ce que**
le diviseur de fréquence numérique (9 ; 207 - 212 ; 605) est à canaux multiples, des signaux vocaux basse fréquence POTS et/ou ISDN et des signaux de données ADSL à plus haute fréquence, à large bande pouvant, à chaque fois, être transmis via la multitude de canaux.

13. Dispositif de terminaison de ligne selon l'une quelconque des revendications précédentes,
**caractérisé en ce que**
le correcteur d'écho (EC) dans le diviseur de fréquence numérique (9 ; 207 - 212 ; 605) peut être adapté seulement lors d'une utilisation commune de signaux vocaux basse fréquence (ISDN, POTS) et de signaux de données à plus haute fréquence (US, DS ; ASDL).

14. Dispositif de terminaison de ligne selon l'une quelconque des revendications précédentes,
**caractérisé en ce que**
dans le diviseur de fréquence numérique (9 ; 207 - 212 ; 605), pour séparer le signal vocal basse fréquence (ISDN, POTS) du signal de données à plus haute fréquence (US, DS ; ADSL), on prévoit un circuit de filtre passe-bas (628) qui comporte un décimateur d'échantillonnage et un générateur d'impulsion connecté en aval de ce dernier et qui est relié avec une interface (630) vers un récepteur-émetteur adapté pour le traitement de signaux vocaux basse fréquence (ISDN, POTS).

15. Dispositif de terminaison de ligne selon l'une quelconque des revendications précédentes,
**caractérisé en ce que**
dans le diviseur de fréquence numérique (9 ; 207 - 212 ; 605), on prévoit un autre circuit de filtre passe-bas (628) qui comporte un générateur d'impulsion connecté en amont et un intégrateur d'échantillonnage et qui est relié avec une interface (630) vers un récepteur-émetteur adapté pour le traitement de signaux vocaux basse fréquence (ISDN, POTS), le signal vocal (ISDN, POTS) basse fréquence étant mis à disposition par le circuit de filtre passe-bas (628) du côté de la sortie, le signal étant superposé au signal de données à plus haute fréquence (US, DS ; ADSL).

16. Dispositif de terminaison de ligne selon l'une quelconque des revendications précédentes,
**caractérisé en ce que**
le diviseur de fréquence numérique (9 ; 207 - 212 ; 605), un translateur (602), un circuit d'amplification de ligne (603) et un circuit Codec (604) sont intégrés ensemble sur une puce unique.

17. Dispositif de terminaison de ligne selon l'une quelconque des revendications précédentes,
**caractérisé en ce que**
le diviseur de fréquence numérique (9 ; 207 - 212 ; 605) comprend au moins un étage d'adaptation de taux d'échantillonnage ainsi qu'une unité de synchronisation d'horloge avec lesquelles on garantit que les taux d'échantillonnage de chaque flux de signal sont égaux au point de sommation (641) respectivement au point de séparation (640).
